# EUROPEAN PATENT SPECIFICATION

(11) **EP 1 207 741 B1**
(45) Date of publication and mention of the grant of the patent: **12.08.2009**
(21) Application number: 00945968.6
(22) Date of filing: 03.07.2000
(51) Int. Cl.: A01G 9/10, C05F 11/04

(54) **A SUBSTRATE FOR GROWING SEEDLINGS AND A METHOD FOR MANUFACTURING BLOCKS ON WHICH TO GROW SEEDLINGS**
SUBSTRAT ZUM ZÜCHTEN VON SÄMLINGEN UND HERSTELLUNGSVERFAHREN VON BLÖCKEN ZUM ZÜCHTEN VON SÄMLINGEN
SUBSTRAT DE CROISSANCE DE SEMENCES ET PROCEDE DE FABRICATION DE BLOCS DESTINES A LA CROISSANCE DE SEMENCES

(30) Priority: 06.07.1999 FI 991538
(43) Date of publication of application: 29.05.2002
(73) Proprietor: Kekkilä Oy, 04300 Tuusula (FI)
(72) Inventor: TAINIO, Liisa, FIN-00740 Helsinki (FI); HUTTUNEN, Jukka, FIN-26910 Unaja (FI)
(74) Representative: Helke, Kimmo Kalervo
(86) International application number: PCT/FI2000/000605
(87) International publication number: WO 2001/001757

(56) References cited:
- GB-A- 1 068 753
- GB-A- 1 300 573
- GB-A- 1 491 940

## Description

The present invention relates to a substrate for growing plants (seedlings, transplants) and particularly to a substrate, of which at least about half is sphagnum peat dried to a moisture content of 25 - 30 per cent by weight and compressed, which, when watered, expands to form a substrate suitable for growing plants, which allows water to penetrate it and retains the water.

Substrates manufactured from peat, such as substrate blocks, i.e. pots or briquettes, are used to grow plants of e.g. tomatoes, cucumbers, peppers, aubergines, and roses, and in the soil or actual substrate used for subsequent greenhouse cultivation. The substrate block should keep its water-retention properties for several months, so that the irrigation water, which it generally provided by drip irrigation, can reach the plant or the roots of the plants for the whole of this period. The substrate block is placed on top of the soil or actual substrate, watering taking place as drip irrigation of the block and through it to the soil or actual substrate. The cultivation of the plants lasts for periods of from several months to as much as one year. In such long-term irrigation, there is a danger of the substrate puddling, so that its originally porous structure gradually becomes blocked, preventing the irrigation water from penetrating to the roots of the plant.

The prior art includes the use of rock wool as a substrate for plants (EP patent 669798), which permits a sufficient amount of water to penetrate through the substrate to the actual substrate. However, rock wool does not naturally decompose, so that it creates large amounts of waste, which must be disposed of in a garbage tip. Rock wool is produced from minerals, which are smelted at more than 1000°C, the fibres adhering to each other at the very high temperature. The high temperature prevents the addition of beneficial organic microbes during manufacture.

FI patent 57740 discloses a method for manufacturing substrate blocks from peat, such as sphagnum peat, in which the peat mass is first dampened with a water solution containing calciferous substances, inorganic fertilizers, and trace elements. The wet mixture is then compressed and dried by heat to a moisture content of 15 - 60 %. The saving in space achieved by wet pressing is, however, relatively modest, which can be seen from the fact that the block does not expand very much when it is wetted. Even a fully expanded block retains a highly compressed structure, so that its water penetration capacity remains poor. Even when intact, such a block also will not withstand being handled and moved.

Equipping a compressed substrate block containing peat with a wrapping, such as a flexible net, a perforated membrane (e.g. DE patent 1290760), or similar, is also known. The flexible wrapping is intended to prevent the block from disintegrating, when it expands when irrigated.

A drawback in all of these previously known substrates manufactured from peat and dried is that, even though when wetted they are initially porous and allow water to penetrate and retain the water, they nevertheless gradually, and especially in long-term plant cultivation, lose this property, so that the irrigation of the plant gradually suffers.

The present invention is intended to eliminate this drawback and create a dried and compressed substrate for the cultivation of plants, consisting of compressed sphagnum peat, which, when irrigated expands to many times its size and does not lose its capacity for water penetration or retention, even after many months.

The invention is based on the observation that in sphagnum peat, especially when handling dried and thus fragile sphagnum peat, many fine peat particles are created, which, when the substrate is watered, are carried by the water and jam in the more restricted parts of the pores, gradually blocking them. The invention is also based on the realization that this detrimental effect can be eliminated by sieving the dried sphagnum peat and selecting the coarsest particles from the sphagnum peat for the substrate, and by adding to this other, still coarser parts, especially fibres.

According to the present invention, at least half of particles of sphagnum peat that are sieved when dry are such that remain in a sieve with a mesh of about 1 mm, and at least 15 per cent by weight are such that remain in a 4-mm sieve, while the substrate contains about 5 - 50 per cent by weight of fibres or other coarse material. Sieving and the amount of coarse material ensure that an expanded substrate will contain a sufficient amount of pores and that these pores will not become blocked, even during long-term irrigation of the plants.

A substrate block according to the invention is, when dry, a compressed piece 1 - 3 cm thick, which is covered with a flexibly stretchable net, film, or layer of adhesive, which, when the substrate block becomes moist and expands, ensures that the expanded substrate block will not disintegrate, but remain intact. The covering is preferably made of a biodegradable and compostable material, such as a net made from an alifatic-aromatic copolymer ester, with preferably a mesh size of 1 - 20 mm, or the substrate block can be coated with natural latex. Alternatively, a cohesion-promoting binder, like a latex polymer, viscous carboxymethylcellulose, a cationic polymer or starch, which also decompose in nature, can be added to the dry-sieved peat mixture itself. A substrate block that has been coated or bound in this way will not disintegrate, even when handled mechanically, which is particularly important in industrial production.

A substrate block for plants can thus be manufactured entirely from naturally decomposable organic substances, so that an organic farming certification body, such as KTTK in Finland or the Soil Association in Great Britain, can approve it. This is implemented by using only organic, naturally decomposing materials and additives. These include sphagnum peat, organic fibres, a naturally decomposing net, film, or glue, approved organic fertilizers, and possibly microbes.

Before being used, a substrate block according to the invention can be economically transported and stored, because its volume when dried and compressed is only about ¼ - ⅓ of its final volume when wet. It can also be stored for long periods, without detrimental changes to its properties. When dried and compressed, its volume is essentially less than that of corresponding previously known substrate blocks for the cultivation of plants, disclosed in the publications WO 9719585 and EP 500155.

A substrate according to the invention can be stored when relatively dry, and, as its dry substance content is preferably quite high, i.e. 150 - 250 kg/m³, it loses water more slowly than known looser materials. Due to this, the substrate can be easily thoroughly wetted after storage, especially if some moisturizing substance, that is as such known, is added to it.

The raw material for a substrate according to the invention is sphagnum peat, which consists of peat of the Acutifolia group (main species Sphagnum fuscum) and Palustria peat (S. Papillosum) and which has a degree of humification of H 1 - 3, preferably 1 - 2, on the von Post scale. If necessary, coarse material, e.g., fibres, preferably cotton grass fibres, flax fibres, wool fibres, wood fibres, sawdust, wood bark, or coco fibres are added to the sieved sphagnum peat. These form large pores in the substrate and accelerate the penetration of water in a dried and compressed substrate. If the peat selected already naturally contains sufficiently coarse fibres, these will be sieved into the peat mixture, so that coarse fibres need not be added to it separately.

In addition, various additives can be mixed into the dried sphagnum peat, such as biocides against plant diseases, or chemical or biological substances that promote the growth of plants, for example, fungal or bacterial preparations, such as Mycostop®, Gliomix®, Prestop®, Trichoderma, Bacillus, mycorrhiza, etc., preferably the Gliocladium product Gliomix®, for example 0,02 - 0,2 g per substrate block.

If necessary, a substrate block according to the invention can be limed and fertilized with a long-acting artificial fertilizer or organic fertilizer, if necessary, with a controlled-release fertilizer. Liming is carried out according to the pH and calcium content requirement of the plants or customer, using 1 - 15, preferably 4 - 8 kg of lime to each cubic metre of peat. Possible fertilization can also be carried out according to the requirements of the customer and plant, using fertilizer, for example, Kekkila Base Fertilizer 1 or 2, in a quantity of 0,2 - 2 kg/m³ of peat.

The size of a substrate block according to the invention is typically 4 - 10 cm x 4 - 20 cm, with a height of 1 - 3 cm, and 4 - 10 cm, when wet and expanded. There is preferably at least one hole in the upper surface of the substrate block ready for a seed, plant, or cutting. The size of the hole in an expanded block is typically 1 - 4 cm, with a depth of 0,5 - 4 cm. The holes can be formed by drilling, pressing, cutting, or forming into a round or angular shape.

A substrate block according to the invention is suitable for cultivation without a pot or tray, though these can be used. The blocks may have grooves in the bottom or other kinds of cavity, which open out towards the bottom and/or sides. There may be several grooves, with a preferable depth and width of 1 - 2 cm per groove in the bottom. In addition, the grooves and cavities can be connected with air channels that run through the surface of the block, the diameter of which is preferably 0,3 - 0,5 cm. These are intended to create an effective circulation of air round and through the bottom of the blocks, to improve the gas exchange and the drainage of the various parts of the block.

In addition, the blocks can be combined into a bar comprising several blocks, with the aid of glue or other substances, such as glued paper, or in some other way.

The invention also relates to a method for manufacturing blocks of substrate for cultivating plants, by drying and compressing sphagnum peat, to reduce its moisture content to 25 - 30 per cent by weight.

According to the invention, the sphagnum peat is sieved after being dried, after which, if necessary, fibres or other coarse material are mixed with the sieved sphagnum peat, so that they comprise 5 - 50 per cent by weight of the substrate. At least half of the particles in the substrate mass are then particles that remain on a 1-mm sieve, and at least 15 per cent by weight remains on a 4-mm sieve. It is possible to mix, for example, cotton-grass fibres and possible other additives with the sphagnum peat. After the addition of coarse material, the mixture is pressed into a sheet, from which blocks are cut by, e.g., sawing, and are finally covered with a stretchable net, film, or glue membrane.

Drying takes place by exposing the peat to a current of hot air, the temperature of which at the start of the drying is at most 200 - 400°C (depending on the initial composition of the peat) and at the end at most about 65 °C, pressing being carried out to about ¼ - ⅓ of the final volume of the block when wet and fully expanded. The drying can take place as charge drying or as continuous tunnel drying using the forward-current principle. In both cases, the initially hot current of air gradually cools as the water evaporates from the moist peat, so that finally the temperate of the air current is suitably low.

Possible additives are added to the dry-sieved peat before it is pressed into a sheet.

It is obvious that the present invention can vary within even very large limits within the scope of the accompanying Claims, and that thus, for example, the selection of the peat can substantially affect the final result. The choice of various additives, depending on the desired characteristics of the product, is also obvious to one versed in the art.

## Claims

1. A substrate for the cultivation of plants, of which at least half is compressed sphagnum peat dried to a moisture content of at least 25 - 30 per cent by weight, **characterized in that** about 5 - 50 per cent by weight of the substrate is fibre or other coarse material, and at least half of the particles of the mass of which substrate remain on a 1-mm sieve and at least about 15 per cent by weight remain on a 4-mm sieve, when dry-sieved.

2. A substrate according to Claim 1, **characterized in that** it is a compressed block, which is covered with a flexibly stretchable net, film, or glue membrane, and that its height is preferably about 1 - 3 cm.

3. A substrate according to Claim 1 or 2, **characterized in that** its dry solids content is 150 - 250 kg/m³ and that its volume is about ¼ - ⅓ of its final volume when wet.

4. A substrate according to Claim 1, 2, or 3, **characterized in that** it contains cotton-grass fibres, flax fibres, wool fibres, wood fibres, sawdust, wood bark and/or coco fibres.

5. A substrate block according to Claim 2, 3, or 4, **characterized in that** it contains in addition fungal or bacterial preparations or other beneficial microbial preparations.

6. A substrate according to one of the above Claims, **characterized in that** it also contains lime in a proportion of 1 - 15, preferably 4 - 8 kg/m³ of sphagnum peat.

7. A substrate according to one of the above Claims, **characterized in that** it also contains basic fertilizer in a proportion of 0,2 - 2 kg/m³ of sphagnum peat or an amount of organic fertilizer suitable to the requirements of the plant.

8. A substrate block according to one of Claims 2 - 7, **characterized in that** it is enclosed in a compostable and biodegradable net, which is manufactured from an alifatic-aromatic copolyester.

9. A substrate block according to one of Claims 2 - 8, **characterized in that** it is coated with natural latex.

10. A substrate block according to Claim 1, **characterized in that,** in addition, it includes a latex polymer, viscous carboxymethylcellulose, a cationic polymer, or starch, to bind the peat particles and the fibres to each other.

11. A substrate block according one of Claims 2 - 10, **characterized in that** there are several grooves in the bottom of it, to ensure effective gas exchange and water drainage from the various parts of the block.

12. A method for manufacturing substrate blocks for the cultivation of plant, by heating sphagnum peat to dry it to a moisture content of about 25 - 30 per cent by weight and pressing it into a sheet, from which blocks are cut, **characterized in that** the sphagnum peat is sieved after drying and a mixture is compressed , at least half of which is the aforesaid dry-sieved sphagnum peat, of the particles of which at least half have remained on an about 1-mm sieve, and at least about 15 per cent by weight on an about 4-mm sieve, and that, in addition, the mixtures contains about 5 - 50 per cent by weight of fibres and possibly other additives, and that the blocks are covered with a flexibly stretchable net, film, or glue membrane.

13. A method according to Claim 12, **characterized in that** the sphagnum peat mixture is dried by bringing it into contact with a current of hot air, the temperature of which is a maximum of 200 - 400°C at the start of the drying and a maximum of about 65°C at the end, and the dried mixture is compressed to about ¼ - ⅓ of its original thickness.

## Patentansprüche

1. Für den Pflanzenanbau bestimmtes Substrat, das wenigstens zur Hälfte aus auf einen Feuchtigkeitsgehalt von 25-30 Gewichtsprozent getrocknetem und zusammengepresstem Sphagnum-Torf (Weißtorf) besteht, **dadurch gekennzeichnet, dass** das Substrat etwa 5-50 Gewichtsprozent Fasern oder anderes grobes Material enthält und bei Trockensiebung von den Fraktionen des Substrats wenigstens die Hälfte auf dem 1-mm-Sieb und wenigstens ca. 15 Gewichtsprozent auf dem 4-mm-Sieb bleiben.

2. Pflanzensubstrat nach Anspruch 1, **dadurch gekennzeichnet, dass** es aus einem stückigen Pressblock besteht, der mit einem elastisch dehnbaren Netz, Film oder einer Leimfolie überzogen ist, und dass seine Höhe bevorzugt etwa 1-3 cm beträgt.

3. Pflanzensubstrat nach Anspruch 1 oder 2, **dadurch gekennzeichnet, dass** sein Trockensubstanzgehalt 150-250 kg/m³ beträgt und sein Volumen etwa 1/4-1/3 seines Endvolumens in befeuchtetem Zustand beträgt.

4. Pflanzensubstrat nach Anspruch 1, 2 oder 3, **dadurch gekennzeichnet, dass** es Wollgrasfasern, Flachsfasern, Wollfasern, Holzfasern, Sägespäne, Baumrinde und/oder Kokosfasern enthält.

5. Pflanzensubstratblock nach Anspruch 2, 3 oder 4, **dadurch gekennzeichnet, dass** er außerdem Pilz- oder Bakterienpräparat oder anderes Nutzorganismus-Präparat enthält.

6. Pflanzensubstrat nach irgendeinem der obigen Ansprüche, **dadurch gekennzeichnet, dass** es außerdem Kalk in einer Menge von 1-15, bevorzugt 4-8 kg pro Kubikmeter Sphagnum-Torf enthält.

7. Pflanzensubstrat nach irgendeinem der obigen Ansprüche, **dadurch gekennzeichnet, dass** es außerdem 0,2-2 kg Grunddünger pro Kubikmeter Sphagnum-Torf oder eine auf die Ansprüche der Pflanze abgestimmte Menge natürlichen (organischen) Düngers enthält.

8. Pflanzensubstratblock nach irgendeinem der Ansprüche 2 bis 7, **dadurch gekennzeichnet, dass** er von einem kompostierbaren und bioabbaubaren Netz aus aliphatisch-aromatischem Kopolyester umgeben ist.

9. Pflanzensubstratblock nach irgendeinem der Ansprüche 2 bis 8, **dadurch gekennzeichnet, dass** er mit Naturlatex beschichtet ist.

10. Pflanzensubstratblock nach Anspruch 1, **dadurch gekennzeichnet, dass** er zur gegenseitigen Bindung der Torfteilchen und Fasern zusätzlich Latexpolymer, viskose Carboxymethylcellulose, kationisches Polymer oder Stärke enthält.

11. Pflanzensubstratblock nach irgendeinem der Ansprüche 2 bis 10, **dadurch gekennzeichnet, dass** zur Verbesserung des Gasaustauschs und der Entwässerung der verschiedenen Teile des Blocks an seinem Boden mehrere Rillen vorhanden sind.

12. Verfahren zur Herstellung von Substratblöcken für Pflanzenbauzwecke durch Erhitzen von Sphagnum-Torf zwecks Trocknens desselben auf einen Feuchtigkeitsgehalt von etwa 25-30 Gewichtsprozent und Pressen desselben zu einer Platte, aus der Blöcke geschnitten werden, **dadurch gekennzeichnet, dass** das Sphagnum-Torf nach erfolgtem Trocknen gesiebt wird und ein Gemisch, das wenigstens zur Hälfte aus besagtem trocken gesiebtem Sphagnum-Torf besteht, von dessen Fraktionen wenigstens etwa die Hälfte als Rückstand auf dem etwa 1-mm-Sieb und wenigstens etwa 15 Gewichtsprozent auf dem etwa 4-mm-Sieb verblieb, gepresst wird, und dass das Gemisch außerdem wenigstens etwa 5-50 Gewichtsprozent Fasern sowie eventuelle andere Zusatzstoffe enthält, und dass die Blöcke mit einem flexibel dehnbaren Netz oder Film oder einer Leimfolie umhüllt sind.

13. Verfahren nach Anspruch 12, **dadurch gekennzeichnet, dass** man das Sphagnum-Torf-Gemisch zum Trocknen mit einem Heißluftstrom in Berührung bringt, dessen Temperatur zu Beginn der Trocknung höchstens 200-400 °C und zum Schluss höchstens etwa 65 °C beträgt, und das getrocknete Gemisch auf etwa 1/4-1/3 seiner Dicke zusammengepresst wird.

## Revendications

1. Substrat pour cultiver des plantes, dont au moins la moitié est de la tourbe de sphaigne compressée et séchée à une teneur en humidité d'au moins 25 à 30 pour cent en poids, **caractérisé en ce qu'**environ 5 à 50 pour cent en poids du substrat est composé de fibres ou d'autres matières grossières, et au moins la moitié de la masse dudit substrat est retenue dans un tamis de 1 mm et au moins environ 15 pour cent en poids est retenu dans un tamis de 4 mm, lorsque le substrat sec est passé au tamis.

2. Substrat selon la revendication 1, **caractérisé en ce qu'**il est une briquette qui est couverte d'un filet, d'un film ou d'une membrane de colle étirable et élastique, et que sa hauteur est de préférence d'environ 1 à 3 cm.

3. Substrat selon la revendication 1 ou 2, **caractérisé en ce que** sa teneur en matière sèche est de 150 à 250 kg/m³, et que son volume est environ 1/4 à 1/3 de son volume final une fois humidifié.

4. Substrat selon la revendication 1, 2 ou 3, **caractérisé en ce qu'**il contient des fibres de linaigrette vaginée, des fibres de lin, des fibres de laine, des fibres de bois, de la sciure, de l'écorce et/ou des fibres de coco.

5. Substrat selon la revendication 2, 3 ou 4, **caractérisé en ce qu'**il contient en outre une préparation fongique ou bactérienne ou une autre préparation microbienne bénéfique.

6. Substrat selon l'une quelconque des revendications précédentes, **caractérisé en ce qu'**il contient en outre de la chaux en une proportion de 1 à 15, de préférence 4 à 8 kg/m³ de tourbe de sphaigne.

7. Substrat selon l'une quelconque des revendications précédentes, **caractérisé en ce qu'**il contient en outre de l'engrais de base en une proportion de 0,2 à 2 kg/m³ de tourbe de sphaigne ou une quantité d'engrais organique adaptée aux exigences de la plante.

8. Briquette de substrat selon l'une quelconque des revendications 2-7, **caractérisée en ce qu'**elle est enfermée dans un filet compostable et biodégradable qui est fabriqué d'un copolyester aliphatique-aromatique.

9. Briquette de substrat selon l'une quelconque des revendications 2-8, **caractérisée en ce qu'**elle est couverte de latex naturel.

10. Briquette de substrat selon la revendication 1, **caractérisée en ce qu'**elle contient en outre un polymère de latex, de la carboxyméthylcellulose visqueuse, un polymère cationique ou de l'amidon pour lier les particules de tourbe et les fibres les unes aux autres

11. Briquette selon l'une quelconque des revendications 2-10, **caractérisée en ce qu'**il y a au fond plusieurs rainures pour assurer un échange de gaz efficace et le drainage des différentes parties de la briquette.

12. Méthode pour fabriquer des briquettes de substrat pour la culture des plantes en chauffant de la tourbe de sphaigne pour la sécher à une teneur d'humidité d'environ 25 à 30 pour cent en poids et en la compressant pour obtenir une plaque, dans laquelle des briquettes sont coupées, **caractérisée en ce que** la tourbe de sphaigne est passée au tamis après le séchage et un mélange est compressé, au moins la moitié duquel mélange est de la tourbe de sphaigne susmentionnée passée au tamis, au moins environ la moitié des particules de laquelle a été retenue par un tamis d'environ 1 mm et au moins 15 pour cent en poids par un tamis d'environ 4 mm, et qu'en outre le mélange contient environ 5 à 50 pour cent en poids de fibres et éventuellement d'autres additifs, et que les briquettes sont couvertes d'un filet, d'un film ou d'une membrane de colle étirable et élastique.

13. Méthode selon la revendication 12, **caractérisée en ce que** le mélange de tourbe de sphaigne est séché en la mettant en contact avec un courant d'air chaud, la température duquel est au maximum 200 à 400 °C au début du séchage et au maximum 65 °C à la fin du séchage, et que le mélange séché est compressé à environ 1/4 à 1/3 de son épaisseur d'origine.
